# EUROPÄISCHE PATENTSCHRIFT

(11) **EP 0 778 239 B1**
(45) Veröffentlichungstag und Bekanntmachung des Hinweises auf die Patenterteilung: **12.08.1998**
(21) Anmeldenummer: 96250272.0
(22) Anmeldetag: 29.11.1996
(51) Int. Cl.: B66D 1/39, G01B 3/10, B65H 75/48

(54) **Seillängengeber mit längsbeweglicher Seiltrommel**
Rope length gauge with longitudinally-movable drum
Capteur de longueur de corde avec un tambour mobile longitudinalement

(30) Priorität: 04.12.1995 DE 29519809 U
(43) Veröffentlichungstag der Anmeldung: 11.06.1997
(73) Patentinhaber: Fernsteuergeräte Kurt Oelsch GmbH, 12347 Berlin (DE)
(72) Erfinder: Schulz, Klaus-Dieter, 12349 Berlin (DE)
(74) Vertreter: Weisse, Jürgen, Dipl.-Phys.

(56) Entgegenhaltungen:
- DE-A- 4 217 607
- DE-C- 732 045
- US-A- 3 041 044

## Beschreibung

### Technisches Gebiet

Die Erfindung betrifft einen Seillängengeber mit einem Gehäuse, einer in dem Gehäuse angeordneten, gegen die Wirkung eines Rückstellantriebs drehbar gelagerten und längsbeweglich geführten Seiltrommel mit einem auf die Seiltrommel aufgewickelten Meßseil, einem gehäusefesten Seilausgang, über welchen das Seil aus dem Gehäuse herausgeführt ist, und einem Stellgetriebe, über welches die Seiltrommel nach Maßgabe ihrer Umdrehungen derart in Axialrichtung in dem Gehäuse verstellbar ist, daß sich die von der Seiltrommel jeweils abgewickelten oder aufgewickelten Windungen des Meßseils im wesentlichen in der Ebene des Seilausgangs befinden.

Beim Aufwickeln des Seils auf die Seiltrommel legt sich eine Seilwindung neben die andere, wobei das Seil in einer Lage sauber auf die Seiltrommel aufgewickelt wird. Das Seil läuft durch einen gehäusefesten Seilausgang, hat also eine definierte Lage zum Gehäuse. Um das zu erreichen wird die Seiltrommel durch das Stellgetriebe nach Maßgabe der Umdrehungen der Seiltrommel beim Auf- oder Abwickeln des Seils axial verschoben, und zwar bei jeder Umdrehung um einen Seildurchmesser.

### Zugrundeliegender Stand der Technik

Bei einem bekannten Seillängengeber dieser Art (offenkundige Vorbenutzung der Firma Fernsteuergeräte Kurt Oelsch GmbH, Berlin) ist die Seiltrommel außen in einem zylindrischen Gehäuse gelagert. Ein Rückstellmotor sitzt koaxial innerhalb der Seiltrommel. Die Seiltrommel ist topfförmig mit einem gelagerten Mantelteil und einem "Boden" oder einer Endplatte nur auf einer Seite. Die Endplatte weist eine Gewindebohrung auf, mit welcher die Endplatte auf einer Gewindespindel gelagert ist. Die Gewindespindel ist undrehbar an einer Endplatte des zylindrischen Gehäuses befestigt. Wenn sich die Seiltrommel dreht, schraubt sich die Endplatte an der Gewindespindel entlang, so daß die Endplatte mit der Drehung auch axial bewegt. Die Drehbewegung der Seiltrommel wird über außermittige, axiale Führungsstangen, die sich durch Durchbrüche der Endplatte der Seiltrommel erstrecken, auf ein Eingangs-Zahnrad eines Untersetzungs-Getriebes übertragen, das wiederum mit der Eingangswelle eines Winkelgebers verbunden ist.

### Offenbarung der Erfindung

Der Erfindung liegt die Aufgabe zugrunde, die Konstruktion eines solchen Seillängengebers zu vereinfachen.

Erfindungsgemäß wird diese Aufgabe dadurch gelöst, daß
(a) in dem Gehäuse eine zentrale Welle drehbar gelagert ist,
(b) die Seiltrommel undrehbar aber längsbeweglich auf dieser zentralen Welle geführt ist,
(c) auf der Welle eine gehäusefest gehaltene, mit einem Außengewinde versehene Gewindehülse sitzt und
(d) an der Seiltrommel eine mit einem Innengewinde versehene Mutter vorgesehen ist, die mit dem Außengewinde der Gewindehülse in Eingriff ist, wobei die Gewindehülse und die Mutter das Stellgetriebe bilden.

Erfindungsgemäß sitzt somit die Seiltrommel auf einer drehbaren Welle. Zu dieser Welle ist alles zentriert. Das Stellgetriebe ist eine einfache Gewindehülse in Verbindung mit einer an einer Nabe oder Endplatte der Seiltrommel sitzenden Mutter, die auf der Welle sitzt und zu dieser zentriert ist. Die Gewindehülse ist ebenfalls zu der Welle zentriert. Das Stellgetriebe kann grob toleriert sein, insbesondere auch hinsichtlich der Lage der Gewindhülse auf der Welle, da die Axialbewegung der Seiltrommel für die Messung unkritisch ist. Die Drehbewegung der Seiltrommel kann unmittelbar an der Welle abgegriffen werden.

Ausgestaltungen der Erfindung sind Gegenstand der Unteransprüche.

Ausführungsbeispiele der Erfindung sind nachstehend unter Bezugnahme auf die zugehörigen Zeichnungen näher erläutert.

### Kurze Beschreibung der Zeichnungen

- Fig.1: zeigt einen Längsschnitt eines ersten Ausführungsbeispiels eines Seillängengebers.
- Fig.2: zeigt in vergrößertem Maßstab eine Einzelheit des Stellgetriebes bei der Seiltrommelanordnung von Fig.1.
- Fig.3: zeigt in weiter vergrößertem Maßstab eine Einzelheit des Außengewindes der Gewindehülse von Fig.2.
- Fig.4: zeigt in einem Querschnitt eine Einzelheit der undrehbaren Kopplung von Seiltrommel und Welle bei dem ersten Ausführungsbeispiel.
- Fig.5: zeigt einen Längsschnitt eines zweiten Ausführungsbeispiels eines Seillängengebers.
- Fig.6: zeigt den die Seiltrommel enthaltenden Teil des Seillängengebers von Fig.5 in perspektivischer Darstellung.
- Fig.7: zeigt in einem Querschnitt eine Einzelheit der Kopplung zwischen dem Rückstellantrieb und der Welle bei der Seiltrommelanordnung von Fig.5 und 6.
- Fig.8: zeigt in vergrößertem Maßstab eine Ausführung des Seilausgangs bei dem Seillängengebers von Fig.5 und 6.

### Bevorzugte Ausführungen der Erfindung

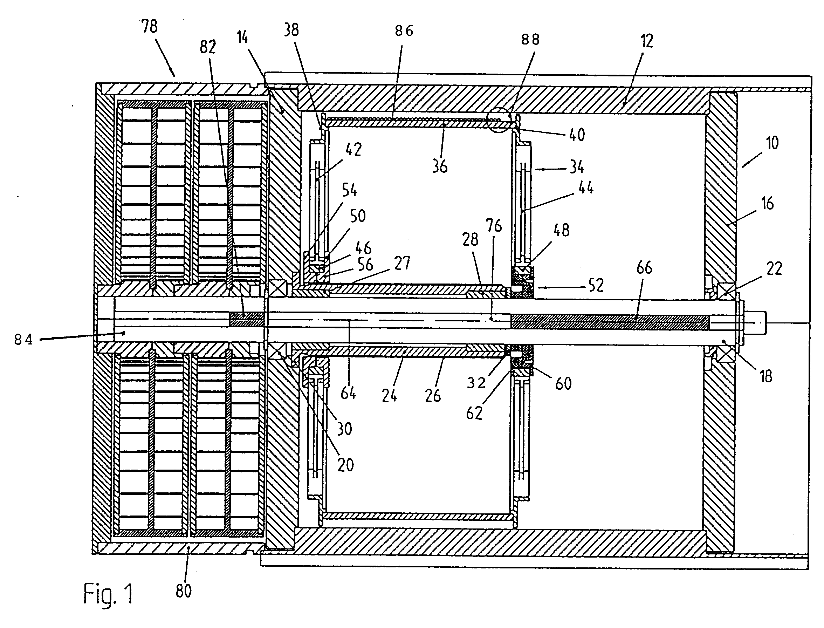

In Fig.1 ist ein erstes Ausführungsbeispiel der Seiltrommelanordnung dargestellt. Das Gehäuse 10 besteht aus einem zylindrischen Mantelteil 12 und zwei die Stirnflächen des Gehäuses 10 bildenden Lagerschilden 14 und 16. In den Lagerschilden 14 und 16 ist eine zu dem Mantelteil 12 koaxiale Welle 18 in Lagern 20 und 22 gelagert. Die Lager 20 und 22 sind Wälzlager.

Auf der Welle 18 sitzt eine Gewindehülse 24 mit einem Außengewinde 26. Die Gewindehülse 24 ist an ihren Enden auf der Welle 18 über Lagerbuchsen 27 und 28 gelagert. Mit einem Ansatz 30 ist die Gewindehülse 24 undrehbar in dem Lagerschild 14 gehalten. Die Gewindehülse 24 ist in axialer Richtung einmal -nach links in Fig.1- durch den Lagerschild 14 und zum anderen -nach rechts in Fig.1- durch einen auf der Welle 18 sitzenden Anschlagring 32 gesichert. Dabei kann die Gewindehülse 24 zur Erleichterung der Fertigung und Montage durchaus mit Spiel oder großzügigen Toleranzen zwischen Lagerschild 14 und Anschlagring 32 gehalten sein.

Mit 34 ist eine Seiltrommel bezeichnet. Die Seiltrommel 34 weist eine zylindrische Seilaufnahme 36 mit Randteilen 38 und 40 auf. Die Randteile 38 und 40 sind über angeformte Speichen 42 bzw. 44 mit je einem Nabenring 46 bzw. 48 verbunden. Auf den Nabenringen 46 und 48 sitzen Naben 50 bzw. 52.

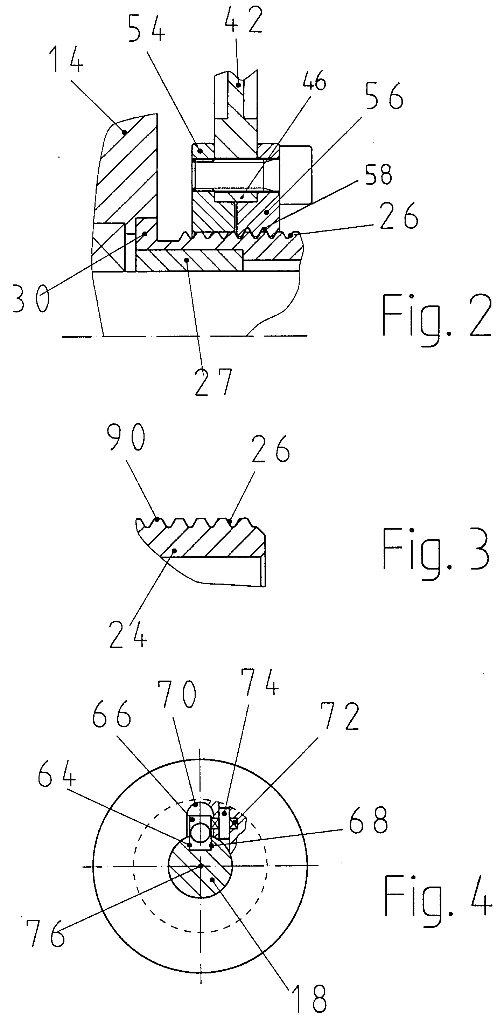

Die Nabe 50 ist zweiteilig mit zwei im Querschnitt L-förmigen Ringteilen 54 und 56 ausgeführt. Die Ringteile 54 und 56 bilden im Querschnitt ein "U" und greifen um den Nabenring 46. Der Ringteil 54 ist auf dem Außengewinde 26 der Gewindehülse 24 gelagert. Der Ringteil 56 weist ein Innengewinde 58 (Fig.2) auf und bildet so eine mit der Seiltrommel 34 fest verbundene Mutter, welche auf dem Außengewinde 26 der Gewindehülse geführt ist.

Die Nabe 52 ist ebenfalls von zwei Ringteilen 60 und 62 gebildet, welche um den Nabenring 48 herumgreifen. Die Nabe 52 ist über Lageringe auf der Welle 18 gelagert und geführt. Die Welle 18 weist eine Längsnut 64 auf. In dieser Längsnut 64 sitzt eine Führungsleiste 66 mit einer planen Führungsfläche 68 (Fig.4). Die Nabe 52 weist eine axiale Ausnehmung 70 (Fig.4) auf, durch welche hindurch sich die Führungsleiste 66 erstreckt. Wie aus Fig.4 ersichtlich ist sitzt in der Nabe 52 eine Rolle 72 auf einer Achse 74. Die Achse 74 erstreckt sich parallel zu der Führungsfläche 68 und gekreuzt zu der Achse 76 der Welle 18. Die Rolle 72 ist von einem Wälzlager gebildet. Die Rolle 72 liegt an der Führungsfläche 68 an.

Mit 78 ist ein Rückstellantrieb bezeichnet. Der Rückstellantrieb 78 ist von einem üblichen Federantrieb mit einer Mehrzahl von in Reihe geschalteten Spiralfedern gebildet. Dieser Federantrieb stützt sich an einem Antriebsgehäuse 80 ab und greift über eine in der Längsnut 64 sitzenden Mitnehmerleiste 82 an. Die Mitnehmerleiste 82 sitzt an einem durch den Lagerschild 14 des Gehäuses 10 hindurchragenden Ende 84 der Welle 18. Der Rückstellantrieb 78 mit dem Antriebsgehäuse 80 sitzt vor der Stirnfläche des Gehäuses 10, die von dem Lagerschild 14 gebildet ist. Der Rückstellantrieb 78 sucht die Welle 18 mit der Führungsleiste 66 im Uhrzeigersinn in Fig.4 zu drehen. Dadurch wird die Führungsleiste 66 spielfrei stets in Anlage an der Rolle 72 gehalten.

Auf die Seiltrommel 34 ist ein Meßseil 86 in einer Lage aufgewickelt, wobei eine Windung des Meßseils 86 dicht neben der anderen liegt. Das Meßseil 86 ist durch einen Seilausgang 88 in Form eines kreisrunden Durchbruchs in dem Mantelteil 12 hindurchgeführt. Der Seilausgang ist daher gehäusefest. Wenn das Meßseil 86 von der Seiltrommel 34 abgezogen wird, dann dreht sich die Seiltrommel 34. Damit schraubt sich die mit der Seiltrommel 34 fest verbundene Mutter 56 an der Nabe 50 auf dem Außengewinde 26 der Gewindehülse 24 nach rechts in Fig.1. Die Steigung des Außengewindes 26 ist so gewählt, daß sich die Seiltrommel 34 bei jeder Umdrehung der Seiltrommel 34 um einen Seildurchmesser nach rechts bewegt. Dadurch liegt die Ebene jeder abgezogenen Seilwindung stets im wesentlichen in der Mittelebene des Seilausgangs 88. Das Abziehen erfolgt dabei gegen die Wirkung des Rückstellantriebs 78. Beim Aufwickeln des Meßseils 86 sorgt die Bewegung der Seiltrommel nach links in Fig.1 dafür, daß das Meßseil 86 wieder sauber Windung neben Windung in einer Lage auf die Seilaufnahme 36 der Seiltrommel 34 aufgewickelt wird. Das Meßseil 86 tritt stets an der gleichen Stelle aus dem Gehäuse 10 aus, so daß sich die Geometrie beim Abziehen des Meßseils 86 nicht ändert.

Wie aus Fig.3 ersichtlich ist, ist das Außengewinde der Gewindehülse auf seinem Umfang bei 90 abgeflacht. Die Gewindegänge sind im Querschnitt trapezförmig. Dadurch ist die Gewindeführung leichtgängig und kann nicht klemmen. Auf die Präzision der Gewindeführung kommt es, wie oben erläutert, nicht entscheidend an.

Ein der Seillänge proportionaler Winkel kann unmittelbar an der Welle 18 abgegriffen und in bekannter Weise einen Inkremental-Winkelgeber oder über ein Untersetzungs-Getriebe einen Absolutwinkelgeber oder ein Potentiometer verdrehen.

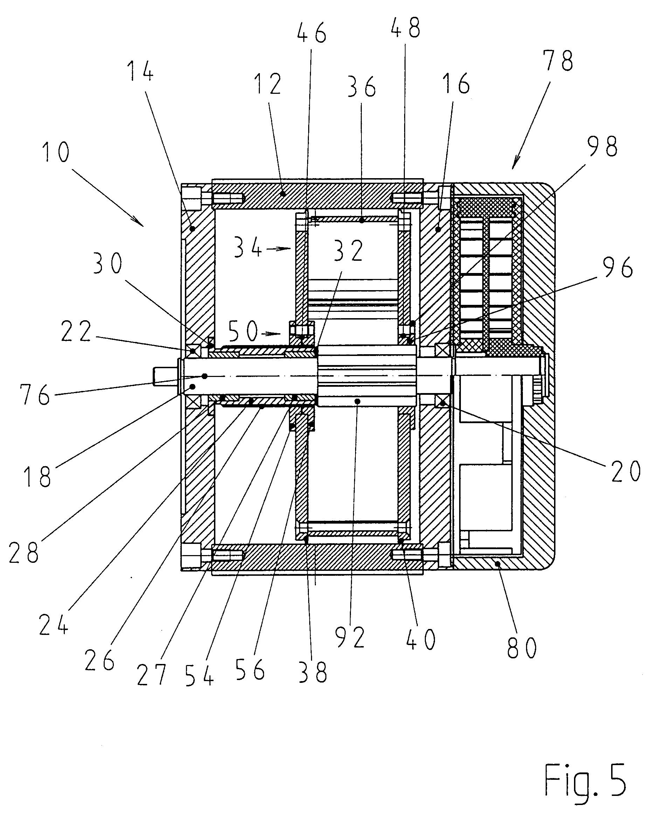

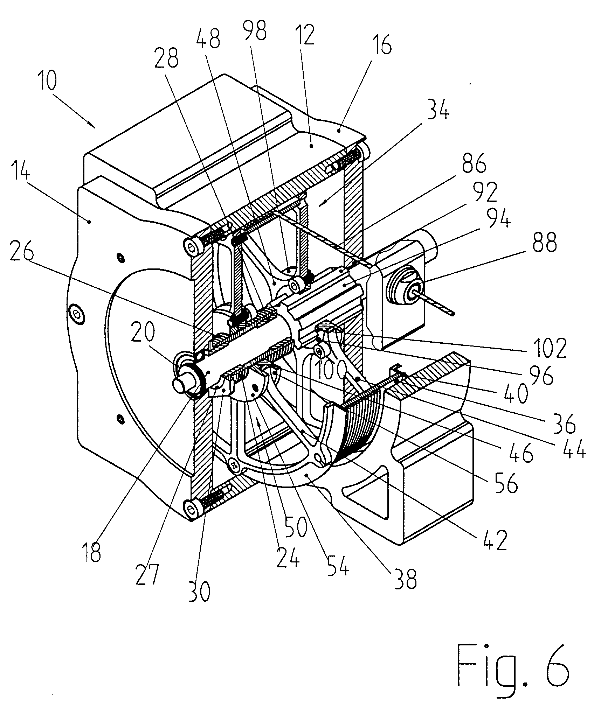

In Fig.5 und 6 ist ein zweites Ausführungsbeispiel der Seiltrommelanordnung dargestellt. Das zweite Ausführungsbeispiel unterscheidet sich von dem ersten Ausführungsbeispiel hauptsächlich in der Anordung des Rückstellantriebs 78 bzgl. des Gehäuses 10, in der Kopplung zwischen Seiltrommel 34 und Welle 18 und in der Kopplung zwischen Rückstellantrieb 78 und Welle 18. Es sollen hier nur die Unterschiede zu dem ersten Ausführungsbeispiel beschrieben werden. Im übrigen tragen entsprechende Teile die gleichen Bezugszeichen wie bei dem ersten Ausführungsbeispiel.

In dem in Fig.5 und 6 dargestellten Ausführungsbeispiel befindet sich ein Keilwellenprofilkörper 92 auf der Welle 18. Der Keilwellenprofilkörper 92 hat einen größeren Durchmesser als die Welle 18 und kann einstückig mit der Welle 18 ausgebildet sein. Der Keilwellenprofilkörper 92 hat sechs Längsnuten 94. Die der Gewindehülse 24 zugewandte Stirnfläche 32 des Keilwellenprofilkörpers 92 bildet den Anschlagring für die Gewindehülse 24.

Auf dem Nabenring 48 sitzt eine Nabe 96, welche hier einteilig ausgebildet ist. Die Nabe 96 ist über einen Flansch 98 mittels Schrauben 100 an dem Nabenring 48 angeschraubt. Die Nabe 96 hat sechs Vorsprünge 102, welche in die sechs Längsnuten 94 des Keilwellenprofilkörpers 92 greifen. Beim Drehen der Welle wird die Seiltrommel 34 über den Eingriff der Vorsprünge 102 in die Längsnuten 94 mitgedreht. Durch das Vorsehen von mehreren Längsnuten 94 und Vorsprüngen 102 (hier sechs), wird die Reibung bei der axialen Bewegung der Seiltrommel 34 auf der Welle 18 gering gehalten.

Der Rückstellantreib 78 ist in Fig.5 und 6 vor der Stirnfläche des Gehäuses 10 angeordnet, die von dem Lagerschild 16 gebildet ist. Dadurch erfolgt die Kraftübertragung zwischen Welle 18 und Seiltrommel 34 in unmittelbarer Nähe des Rückstellantriebs 78. Hierdurch wird die Kraftübertragung zwischen Rückstellantrieb 78 und Seiltrommel 34 günstiger als im ersten Ausführungsbeispiel.

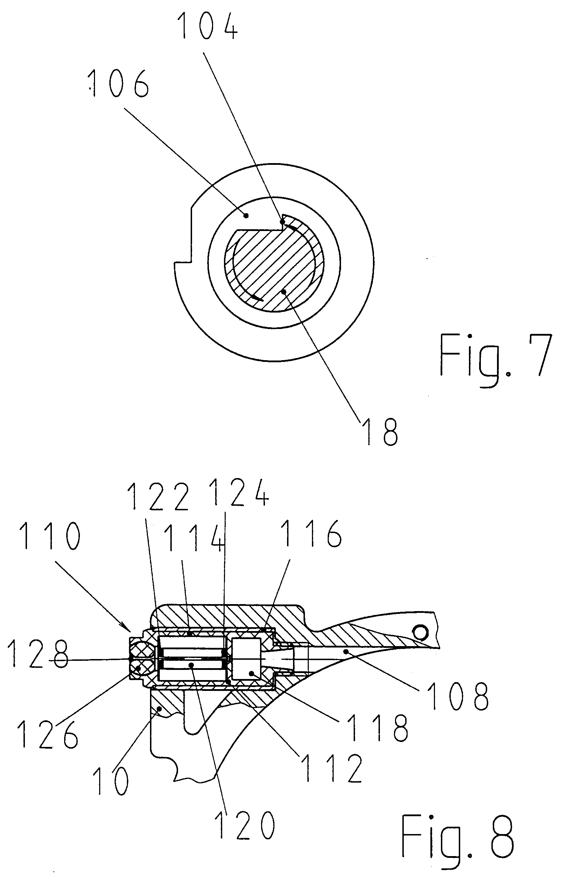

Fig.7 zeigt die kraftübertragende Verbindung zwischen Rückstellantrieb 78 und Welle 18 bei dem zweiten Ausführungsbeispiel. Die Welle 18 ist in diesem Bereich angefräst, so daß eine Mitnehmernase 104 auf der Welle 18 entsteht. In diese Mitnehmernase 104 greift der Federkern 106 des Rückstellantrebs 78. Wenn die Welle 18 entgegen dem Uhrzeigersinn in Fig.7 gedreht wird, werden die Spiralfeder des Rückstellantreibs gespannt und üben eine Rückstellkraft im Uhrzeigersinn auf die Welle 18 aus.

In Fig.8 ist eine bevorzugte Ausführung des Seilausgangs 88 dargestellt. Das (in Fig.8 nicht dargestellte) Seil tritt von der Seiltrommel von rechts in den Seilausgang 88 ein und nach links aus dem Gehäuse 10 aus. An dieser Stelle ist das Gehäuse 10 mit einer durchgehenden gestuften Bohrung 108 versehen. Ein Seilführungskörper 110 besteht aus zwei komplementär ausgebildeten Kunststoffteilen 112 und 114 von halbzylindrischer Grundform. In zusammengebautem Zustand werden die beiden Kunststoffteile 112 und 114 durch eine Metallhülse 116 zusammengehalten. Die Metallhülse 116 und damit der gesamte Seilführungskörper 110 wird in den linken Teil der Bohrung 108 eingeschraubt. Auf dieser Weise ist der Seilführungskörper 110 nahezu vollständig in der Gehäusewandung eingelassen und wird dadurch vor Beschädigungen von außen geschützt.

Der Seilführungskörper 110 weist eine erste zylindrische Kammer 118 auf. In diese Kammer 118 kann eine Fettkammer zur Schmierung des Seils eingesetzt werden. Links von der ersten Kammer 118 befindet sich eine zweite zylindrische Kammer 120. In dieser Kammer 120 sitzen Bürsten 122 und 124. Die Bürsten liegen am dem Seil an und dienen zum Staubschutz. An dem äußeren Ende des Seilführungskörpers 110 befindet sich eine in eine Lagerung drehbare Kugel 126. Die Kugel 126 ist mit einer zentralen durchgehenden Bohrung 128 versehen, durch welche das Seil läuft. Wenn das Seil schräg aus dem Gehäuse 10 herausgezogen wird, dreht sich die Kugel 126 entsprechend, so daß immer eine einwandfreie Führung des Seils gewährleistet ist.

## Patentansprüche

1. Seillängengeber mit einem Gehäuse (10), einer in dem Gehäuse (10) angeordneten, gegen die Wirkung eines Rückstellantriebs (78) drehbar gelagerten und längsbeweglich geführten Seiltrommel (34) mit einem auf die Seiltrommel (34) aufgewickelten Meßseil (86), einem gehäusefesten Seilausgang (88), über welchen das Meßseil (86) aus dem Gehäuse (10) herausgeführt ist, und einem Stellgetriebe (24,56), über welches die Seiltrommel (34) nach Maßgabe ihrer Umdrehungen derart in Axialrichtung in dem Gehäuse (10) verstellbar ist, daß sich die von der Seiltrommel (34) jeweils abgewickelten oder aufgewickelten Windungen des Meßseils (86) im wesentlichen in der Ebene des Seilausgangs (88) befinden, **dadurch gekennzeichnet, daß**
(a) in dem Gehäuse (10) eine zentrale Welle (18) drehbar gelagert ist,
(b) die Seiltrommel (34) undrehbar aber längsbeweglich auf dieser zentralen Welle (18) geführt ist,
(c) auf der Welle (18) eine gehäusefest gehaltene, mit einem Außengewinde (26) versehene Gewindehülse (24) sitzt und (d) an der Seiltrommel (34) eine mit einem Innengewinde (58) versehene Mutter (56) vorgesehen ist, die mit dem Außengewinde (26) der Gewindehülse (24) in Eingriff ist, wobei die Gewindehülse (24) und die Mutter (56) das Stellgetriebe bilden.

2. Seillängengeber nach Anspruch 1, **dadurch gekennzeichnet, daß** das Außengewinde (26) der Gewindehülse (24) auf seinem Umfang (90) abgeflacht ist.

3. Seillängengeber nach einem der Ansprüche 1 oder 2, **dadurch gekennzeichnet, daß**
(a) das Gehäuse (10) zylindrisch mit einem Mantelteil (12) und zwei Lagerschilden (14,16) ausgebildet ist, wobei die Welle (18) über Lager (20,22) in den Lagerschilden (14,16) gelagert ist,
(b) die Gewindehülse (24) mit einem ersten Ende undrehbar in einem ersten der Lagerschilde (14) gehalten und über Lagerbuchsen (27,28) auf der Welle (18) zentriert gelagert ist, und
(c) die Mutter (56) an einer dem ersten Lagerschild (14) benachbarten ersten Nabe (50) der Seiltrommel (34) sitzt.

4. Seillängengeber nach Anspruch 3, **dadurch gekennzeichnet, daß**
(a) an der Welle (18) anschließend an die Gewindehülse (24) eine axiale Führungsleiste (66) mit einer planen Führungsfläche (68) vorgesehen ist,
(b) in einer zweiten Nabe (52) der Seiltrommel (34) eine Führungsrolle (72) um eine zu der Führungsfläche (68) parallelen, zu der Achse (76) der Welle (18) gekreuzten Drehachse gelagert ist, die an der Führungsfläche (68) anliegt.

5. Seillängengeber nach Anspruch 6, **dadurch gekennzeichnet, daß**
(a) der Rückstellantrieb (78) an der Welle (18) angreift und
(b) die Führungsfläche (68) unter dem Einfluß des Rückstellantriebs (78) stets in Anlage an an der Führungsrolle (72) gehalten ist.

6. Seillängengeber nach einem der Ansprüche 3 bis 5, **dadurch gekennzeichnet, daß** die Gewindehülse (24) axial mit Spiel zwischen dem ersten Lagerschild (14) des Gehäuses (10) und einem auf der Welle (18) sitzenden Anschlag (32) gehalten ist.

7. Seillängengeber nach einem der Ansprüche 3 bis 6, **dadurch gekennzeichnet, daß** der Rückstellantrieb (78) vor der Stirnfläche des Gehäuses (10) angrenzend an den ersten oder an den zweiten Lagerschild (14;16) angeordnet ist.

8. Seillängengeber nach einem der Ansprüche 1-7, **dadurch gekennzeichnet, daß**
(a) an der Welle (18) anschließend an die Gewindehülse (24) ein Keilwellenprofilkörper (92) mit mindestens einer Längsnut (94) vorgesehen ist,
(b) in einer zweiten Nabe (96) der Seiltrommel (34) komplementär zu den Längsnuten (94) ausgebildete Vorsprünge (102) vorgesehen sind, welche in die Längsnuten (94) greifen.

9. Seillängengeber nach einem der Ansprüche 1-8, **dadurch gekennzeichnet, daß** der Seilausgang einen Seilführungskörper (110) aufweist, welcher sich zum größten Teil innerhalb der Wandung des Gehäuses (10) befindet.

## Claims

1. Cable length transmitter having a housing (10), a cable drum (34) rotatably mounted in the housing (10) and longitudinally movably guided against the action of a return drive (78), having a measuring cable (86) wound up on the cable drum (34), a housing fixed cable outlet (88) through which the measuring cable (86) is guided out of the housing (10), and an adjusting mechanism (24,56) through which the cable drum (34) is adjustable according to its revolutions axialen direction in the housing (10) such that the windings of the measuring cable (86) respectively wound up or onto the cable drum (34) are generally in the plane of the cable outlet (88), **characterised in that**
(a) a central shaft (18) is rotatably mounted in the housing (10),
(b) the cable drum (34) is guided non-rotatably but longitudinally movably on this central shaft (18),
(c) an extenally threaded housing (26) fixed sleeve (24) is guided on the shaft (18), and
(d) a nut (56) provided with an internal thread (58) is provided at the cable drum (34), which engages the external thread (26) of the threaded sleeve (24), the threaded sleeve (24) and the nut (56) forming the adjusting mechanism.

2. Cable length transmitter according to claim 1, **characterised in that** the external thread (26) of the threaded sleeve (24) is flattened on its circumference (90).

3. Cable length transmitter according to claim 1 or 2, **characterized in that**
(a) the housing (10) is cylindrical with a jacket portion (12) and two bearing brackets (14,16), the shaft (18) being mounted through bearings (20,22) in the bearing brackets (14,16),
(b) the threaded sleeve (24) is held non-rotatably with its first end in a first one of the bearing brackets (14) and is centrally mounted through bearing bushings (27,28) on the shaft (18), and
(c) the nut (56) is located at a first hub (50) of the cable drum (34) adjacent to the first bearing bracket (14).

4. Cable length transmitter according to claim 3, **characterised in that**
(a) an axial guiding bar (66) having a plane guiding surface (68) is provided at the shaft (18) adjacent to the threaded sleeve (24),
(b) a guiding roll (72) is mounted in a second hub (52) of the cable drum (34) about a rotary axis parallel to the guiding surface (68) and crossing the axis (76) of the shaft (18), which rotary axis is in contact with the guiding surface (68).

5. Cable length transmitter according to claim 6**, characterised in that**
(a) the return drive (78) engages the shaft (18), and
(b) the guiding surface (68) is always held in contact with the guiding roll (72) under the action of the return drive (78).

6. Cable length transmitter according to one of claims 3 to 5, **characterised in that** the threaded sleeve (24) is held axially with free space between the first bearing bracket (14) of the housing (10) and a stop (32) provided on the shaft (18).

7. Cable length transmitter according to one of claims 3 to 6, **characterised in that** the return drive (78) is arranged in front of the front face of the housing (10) adjacent to the first or second bearing brackets (14;16).

8. Cable length transmitter according to on of claims 1-7, **characterised in that**
(a) splined shaft profile body (92) having at least one longitudinal groove (94) is provided at the shaft (18) adjacent to the threaded sleeve (24),
(b) projections (102) formed complementary to the longitudinal grooves (94) are provided in a second hub (96) of the cable drum (34), which projections engage the longitudinal grooves (94).

9. Cable length transmitter according to one of the claims 1-8, **characterised in that** the cable outlet has a cable guiding body (110) located to an large extent, within the wall of the housing (10).

## Revendications

1. Transmetteur de longueur de câble muni d'un boitier (10), d'un tambour d'enroulement (34) guidé de façon susceptible de se déplacer longitudinalement, logé de façon susceptible de tourner contre l'action d'un entraînement de rappel (78) et disposé dans le boîtier (10), tambour étant muni d'un câble de mesure (86) enroulé sur le tambour d'enroulement (34), d'une sortie de câble (88) fixe par rapport au boîtier par l'intermédiaire de laquelle le câble de mesure (86) est guidé hors du boitier (10) et d'un engrenage de réglage (24,56) par l'intermédiaire duquel le tambour d'enroulement (34) est susceptible d'être déplacé dans le boîtier (10) dans le sens axial en proportion de ses révolutions de telle façon que les tours d'enroulement ou de déroulement du câble de mesure (86) exécutés chaque fois par le tambour d'enroulement (34) se trouvent sensiblement dans le plan de la sortie de câble (88),
**caractérisé par le fait que**
(a) un arbre central (18) est logé dans le boîtier (10) de façon susceptible de tourner,
(b) le tambour d'enroulement (34) est guidé sur cet arbre central (18) de façon non-susceptible de tourner mais susceptible de se déplacer longitudinalement,
(c) une douille filetée (24) pourvue d'un filetage extérieur (26) et maintenue fixement par rapport au boîtier se trouve sur l'arbre (18) et
(d) un écrou (56) pourvu d'un filetage intérieur (58) et étant en prise avec le filetage extérieur (26) de la douille filetée (24) est prévu au tambour d'enroulement (34), la douille filetée (24) et l'écrou (56) formant l'engrenage de réglage.

2. Transmetteur de longueur de câble selon la revendication 1, **caractérisé par le fait que** le filetage extérieur (26) de la douille filetée (24) est aplati sur son périmètre (90).

3. Transmetteur de longueur de câble selon l'une des revendications 1 ou 2, **caractérisé par le fait que**
(a) le boitier (10) est développé de façon cylindrique avec un élément de manteau (12) et deux flasques (14,16), l'arbre (18) étant logé dans les flasques (14,16) par l'intermédiaire de paliers (20,22),
(b) la douille filetée (24) est maintenue avec une première extrémité de façon non-susceptible de tourner dans la première des flasques (14) et qu'elle est logée par l'intermédiaire de coussinets (27,28) de façon centrée sur l'arbre (18), et
(c) l'écrou (56) se trouve à un premier moyeu (50) du tambour d'enroulement (34) adjacent à la première flasque (14).

4. Transmetteur de longueur de câble selon la revendication 3, **caractérisé par le fait que**
(a) une barre de guidage (66) axiale est pourvue d'une surface de guidage plane (68) à l'endroit de l'arbre (18) après la douille filetée (24),
(b) un rouleau de guidage (72) est logé dans un second moyeu (52) du tambour d'enroulement (34) autour d'un axe de rotation perpendiculaire à l'axe (76) de l'arbre (18), parallèle à la surface de guidage (68) et adjacent à la surface de guidage (68).

5. Transmetteur de longueur de câble selon la revendication 6**, caractérisé par le fait que**
(a) l'entraînement de rappel (78) mord sur l'arbre (18) et
(b) la surface de guidage (68) est maintenue, sous l'influence de l'entraînement de rappel (78), constamment en appui contre le rouleau de guidage (72).

6. Transmetteur de longueur de câble selon l'une des revendications 3 à 5**, caractérisé par le fait que** la douille filetée (24) est maintenue axialement avec du jeu entre la première flasque (14) du boîtier (10) et une butée (32) se trouvant sur l'arbre (18).

7. Transmetteur de longueur de câble selon l'une des revendications 3 à 6, **caractérisé par le fait que** l'entraînement de rappel (78) est disposé devant la surface frontale du boîtier (10) de façon adjacente à la première ou à la seconde flasque (14;16).

8. Transmetteur de longueur de câble selon l'une des revendications 1-7**, caractérisé par le fait que**
(a) un corps profilé d'arbre cannelé (92) est pourvu d'au moins une rainure longitudinale (94) à l'endroit de l'arbre (18) après la douille filetée (24),
(b) des saillies (102) développées de façon complémentaire aux rainures longitudinales (94) et mordant dans les rainures longitudinales (94) sont prévues dans un second moyeu (96) du tambour d'enroulement (34).

9. Transmetteur de longueur de câble selon l'une des revendications 1-8, **caractérisé par le fait que** la sortie de câble présente un corps de guidage de câble (110) qui se trouve en majeur partie à l'intérieur de la paroi du boîtier (10).
